# EUROPÄISCHE PATENTSCHRIFT

(11) **EP 3 265 681 B1**
(45) Veröffentlichungstag und Bekanntmachung des Hinweises auf die Patenterteilung: **17.02.2021**
(21) Anmeldenummer: 16708111.6
(22) Anmeldetag: 01.03.2016
(51) Int. Cl.: F04D 13/16, F04D 29/02, F04D 29/42, F04D 29/60, F04D 29/62, B29C 41/04

(54) **KUNSTSTOFFBEHÄLTER MIT STRÖMUNGSFÜHRENDEM BAUTEIL**
PLASTIC CONTAINER WITH FLOW-GUIDING COMPONENT
CUVE EN PLASTIQUE POURVUE D'UN DISPOSITIF DE GUIDAGE DE FLUX

(30) Priorität: 06.03.2015 DE 102015204075
(43) Veröffentlichungstag der Anmeldung: 10.01.2018
(73) Patentinhaber: KSB SE & Co. KGaA, 67227 Frankenthal (DE)
(72) Erfinder: JUNG, Patrick, 67227 Frankenthal (DE); SCHUNK, Axel, 67227 Frankenthal (DE)
(86) Internationale Anmeldenummer: PCT/EP2016/054296
(87) Internationale Veröffentlichungsnummer: WO 2016/142210

(56) Entgegenhaltungen:
- EP-A1- 2 053 171
- EP-A2- 1 359 094
- DE-A1- 4 205 332
- US-A- 6 106 248
- US-A1- 2002 003 104
- US-A1- 2002 043 533

## Beschreibung

Die Erfindung betrifft eine Anordnung mit einem Kunststoffbehälter und einem strömungsführenden Bauteil, das ein Pumpengehäuse aufweist. In der folgenden Beschreibung ist unter dem Gehäuse das Pumpengehäuse zu verstehen.

Bei einer solchen Anordnung kann es sich beispielsweise um eine Abwasserhebeanlage handeln. Hebeanlagen leiten Wasser, das unter der Rückstauebene anfällt, rückstausicher ab. Sie werden zur Förderung von fäkalienfreiem und fäkalienhaltigem Abwasser eingesetzt, das in Kellern von Wohngebäuden anfällt. In einem Kunststoffbehälter wird das anfallende Abwasser gesammelt. Der Füllstand wird über einen Niveausensor erfasst. Wird ein bestimmter Grenzwert erreicht, so schaltet sich ein strömungsführendes Bauteil ein, welche das Abwasser aus dem Kunststoffbehälter heraus fördert. Bei dem strömungsführenden Bauteil kann es sich beispielsweise um eine Kreiselpumpe handeln.

Bei herkömmlichen Abwasserhebeanlagen weist der Kunststoffbehälter eine Öffnung auf, in welche das Pumpenaggregat eingeführt wird, wobei das Gehäuse mit dem Saugstutzen in das Abwasser eintaucht und der Motor aus dem Behälter herausragt. Die Abdichtung zum Behälter ist aufwendig und erfolgt beispielsweise meist mit speziellen Flanschringen oder Platten. Die Flanschringe bzw. Platten tragen das Pumpenaggregat. Zwischen den Flanschringen bzw. Platten und den Kunststoffbehälter sind kostspielige Dichtungssysteme erforderlich, welche den Montageaufwand erhöhen.

Die DE 10 2007 008 692 A1 zeigt eine Anordnung mit einem Kunststoffbehälter, in dem sich Abwasser sammelt. An der Oberseite des Kunststoffbehälters ist eine Öffnung vorgesehen, in die ein strömungsführendes Bauteil hineinragt. Das strömungsführende Bauteil ist als Kreiselpumpenaggregat ausgebildet und umfasst ein Gehäuse, in dem ein Laufrad angeordnet ist. Das Gehäuse mit dem Laufrad ragt in das Abwasser hinein. Über einen Saugstutzen wird das Abwasser angesaugt und von der Kreiselpumpe aus dem Kunststoffbehälter heraus gefördert. Der Motor des Pumpenaggregates ist mit dem Laufrad über eine Welle verbunden.

Das Kreiselpumpenaggregat, bestehend aus dem Pumpengehäuse mit dem Laufrad und dem über eine Welle verbundenen Motor, bildet eine Einheit. Der Motorteil des Kreiselpumpenaggregats ragt aus dem Behälter heraus. Das Kreiselpumpenaggregat wird von Flanschringen bzw. Platten getragen, die zwischen dem Teil angeordnet sind, der in den Behälter ragt und dem Teil oberhalb des Behälters. Zwischen den Flanschringen bzw. Platten und dem Kunststoffbehälter sind Dichtungsvorrichtungen angeordnet, sodass weder Abwasser noch unangenehme Gerüche aus dem Behälter nach draußen dringen.

In der DE 199 13 530 A1 wird eine Wasserhebeanordnung mit einem Sammelbehälter aus Kunststoff beschrieben, der Flüssigkeit aufnimmt, die in unregelmäßigen Abständen und mit unterschiedlicher Menge dem Kunststoffbehälter zufließt. Durch ein als Pumpe ausgeführtes strömungsführendes Bauteil wird die Flüssigkeit aus dem Sammelbehälter in ein Kanalnetz gefördert. Das Pumpengehäuse mit dem Saugstutzen ragt in den Behälter hinein. Der Antriebsteil der Pumpe ragt aus dem Behälter heraus. Auch bei dieser Konstruktion ist eine aufwändige Abdichtung zwischen dem Kreiselpumpenaggregat und dem Kunststoffbehälter erforderlich.

Eine gattungsgemäße Anordnung zeigt die US 6 106 248 A. Weiterhin offenbaren die US 2002/0043533 A1 sowie die EP 2 053 171 A1 Anordnungen bestehend aus einem Kunststoffbehälter und einem strömungsführenden Bauteil. Die EP 1 359 094 A2 offenbart einen Kunststoffbehälter für Kraftfahrzeuge.

Aufgabe der Erfindung ist es, eine Anordnung zu schaffen, bei der ein strömungsführendes Bauteil und ein Kunststoffbehälter effizient zusammenwirken und dabei eine zuverlässige Abdichtung zwischen beiden Komponenten gewährleistet wird. Die Anordnung soll sich durch eine einfache Montage und eine zuverlässige Betriebsweise auszeichnen. Weiterhin soll die Anordnung möglichst preiswert herzustellen sein und eine hohe Lebensdauer aufweisen.

Diese Aufgabe wird erfindungsgemäß durch eine Anordnung mit den Merkmalen des Anspruchs 1 und einem Verfahren zur Herstellung der Anordnung mit den Merkmalen des Anspruchs 9 gelöst. Bevorzugte Varianten sind in den Unteransprüchen ausgeführt.

Erfindungsgemäß wird das Gehäuse des strömungsführenden Bauteils durch Rotationssintern mit dem Behälter formschlüssig verbunden. Dadurch wird das Gehäuse des strömungsführenden Bauteils so in den Behälter integriert, dass eine zuverlässige Abdichtung auch ohne aufwendige Dichtungsvorrichtungen gewährleistet wird. Dies ist insbesondere im Abwasserbereich von großem Vorteil. Die erfindungsgemäße Anordnung unterbindet auf zuverlässige Weise ein Austreten von Medium und unangenehmen Gerüchen.

Durch das formschlüssige Verbinden des Gehäuses mit dem Kunststoffbehälter wird eine kompakte Einheit geschaffen, welche die Endmontage erheblich erleichtert. An das im Behälter integrierte Gehäuse des strömungsführenden Bauteils kann auf einfache Weise ein Motor angeschlossen werden. Im Gegensatz zu herkömmlichen Anordnungen sind keine zusätzlichen tragenden Teile, wie beispielsweise Platten oder Flanschringe erforderlich, die bei herkömmlichen Konstruktionen zwischen dem unteren Teil, welcher in den Behälter hineinragt und dem oberen Teil, welcher aus dem Behälter herausragt, notwendig sind. Auch aufwändige Abdichtungen sind entbehrlich.

Erfindungsgemäß erfolgt die formschlüssige Verbindung des Gehäuses mit dem Behälter mittels Rotationssintern, das auch als Rotationsschmelzen bezeichnet wird. Zur Herstellung der erfindungsgemäßen Anordnung wird dazu das Gehäuse des strömungsführenden Bauteils in einer Form angeordnet. Die Form kann beispielsweise aus Stahl oder Aluminium bestehen. Die Form wird auf einen Formträger montiert. Die Befestigung des Gehäuses an der Form kann mit unterschiedlichen Verbindungsmitteln, wie beispielsweise Schraub- oder Klemmverbindungen, erfolgen.
In einem nächsten Schritt erfolgt ein Vorheizen der Rotationsform und des Gehäuses mit einer geeigneten Heizvorrichtung, vorzugsweise einem Heizgebläse. In die Form werden Kunststoffpartikel eingebracht. Dabei kann es sich beispielsweise um ein Kunststoffgranulat und/oder ein Kunststoffpulver handeln. Zweckmäßigerweise wird thermoplastisches Kunststoffmaterial verwendet. Als besonders vorteilhaft zur Erzeugung der erfindungsgemäßen Anordnung haben sich dabei Polyolefine erwiesen, insbesondere Polyethylen, zum Beispiel PE-LLD.

Es erfolgt ein Anlegen von Kunststoffpartikeln durch Rotation an die Form und das Gehäuse. Während des Rotationsvorgangs wird eine Temperatur aufrechterhalten, die zum Schmelzen der Kunststoffpartikel führt. Die Kunststoffpartikel werden durch die Rotationskräfte an die Form und das Gehäuse gepresst, wo sie schmelzen und erstarren.

Dadurch wird ein einheitliches Gebilde aus einem Kunststoffbehälter und einem darin zumindest teilweise integrierten Gehäuse eines strömungsführenden Bauteils geschaffen. Es bilden sich Wandungen aus, die einstückig mit dem Behälter ausgebildet sind und die das Gehäuse formschlüssig umschließen.

Die erfindungsgemäße Anwendung eines Rotationssinterverfahrens erzeugt eine formschlüssige Verbindung zwischen dem Gehäuse und dem Kunststoffbehälter, die eine hohe Stabilität und eine zuverlässige Abdichtung aufweist.

Nach erfolgter Rotationsphase wird die Anordnung entformt. Bei der Anordnung handelt es sich nun um ein einheitliches Modul mit einem Kunststoffbehälter, in dem das Gehäuse eines strömungsführenden Bauteils einrotiert ist.

Erfindungsgemäß besteht das Gehäuse des strömungsführenden Bauteils aus einem metallischen Werkstoff. Beispielsweise kann es sich dabei um einen Gusswerkstoff handeln. Das metallische Gehäuse ist dabei derart in die Kunststoffwandungen des Behälters durch das Rotationssinterverfahren eingebettet, dass zusätzliche Dichtelemente zwischen der Außenwand des metallischen Gehäuses und den Wandungen des Behälters entbehrlich sind. Erfindungsgemäß liegen die Wandungen des Behälters dichtend an dem Gehäuse an, so dass kein Medium bzw. keine Gerüche austreten können.

Bei einer besonders günstigen Ausführung der Erfindung handelt es sich bei dem metallischen Gehäuse um ein Spiralgehäuse einer Kreiselpumpe.

Durch die Einbettung des Gehäuses in eine Wandung des Behälters mittels eines Rotationsschmelzens liegt die Wand des Behälters am Gehäuse dichtend an. Vorzugsweise liegt die Wandung des Behälters dabei spaltfrei am Gehäuse an. Somit wird eine dichtungsfreie Konstruktion geschaffen.

Vorzugsweise sind im Gehäuse bewegliche Bauteile angeordnet. Beispielsweise kann es sich dabei um das Laufrad einer Kreiselpumpe handeln, welches in einem metallischen Spiralgehäuse angeordnet ist.

Als besonders günstig hat es sich erwiesen, wenn an das einrotierte Gehäuse angrenzende Teile durch das Rotationssintern mit ausgeführt werden, wie beispielsweise Saug- oder Druckstutzen.

Bei einer Variante bildet eine Wandung des Behälters einen Stutzen. Durch diesen Stutzen kann das Medium, welches sich im Behälter gesammelt hat, in das Gehäuse des strömungsführenden Bauteils einströmen. Durch erfindungsgemäße Anwendung eines Rotationssinterverfahrens wird dieser Saugstutzen aus einem Kunststoffmaterial ausgebildet. Der Stutzen ist einstückig mit dem Behälter ausgebildet. Die dazu notwendigen Konturen der Form werden in geeigneter Weise an das Gehäuse herangeführt und/oder durch das Gehäuse hindurchgeführt. Werden während des Rotationsprozesses Behälteröffnungen verschlossen, müssen diese später durch mechanische Nacharbeitung wieder geöffnet werden.

Bei einer besonders günstigen Variante der Erfindung ist am Gehäuse ein Leitungselement zur Zu- und/oder Abführung von Medium angeordnet. Dieses Leitungselement wird erfindungsgemäß durch Rotationssintern mit Kunststoff umschlossen. Durch das Umschließen mit Kunststoff wird für das Leitungselement und/oder das Gehäuse ein Korrosionsschutz geschaffen.

An das Gehäuse des strömungsführenden Bauteils kann beispielsweise ein metallischer Krümmer als Leitungselement angeordnet werden.

Weitere Merkmale und Vorteile der Erfindung ergeben sich aus der Beschreibung eines Ausführungsbeispiels anhand von Zeichnungen und aus den Zeichnungen selbst.

Dabei zeigt:
- Figur 1: eine perspektivische Darstellung einer Anordnung,
- Figur 2: eine Draufsicht auf die Anordnung,
- Figur 3: einen Schnittdarstellung entlang der A-A-Linie,
- Figur 4: eine Schnittdarstellung entlang der B-B-Linie.

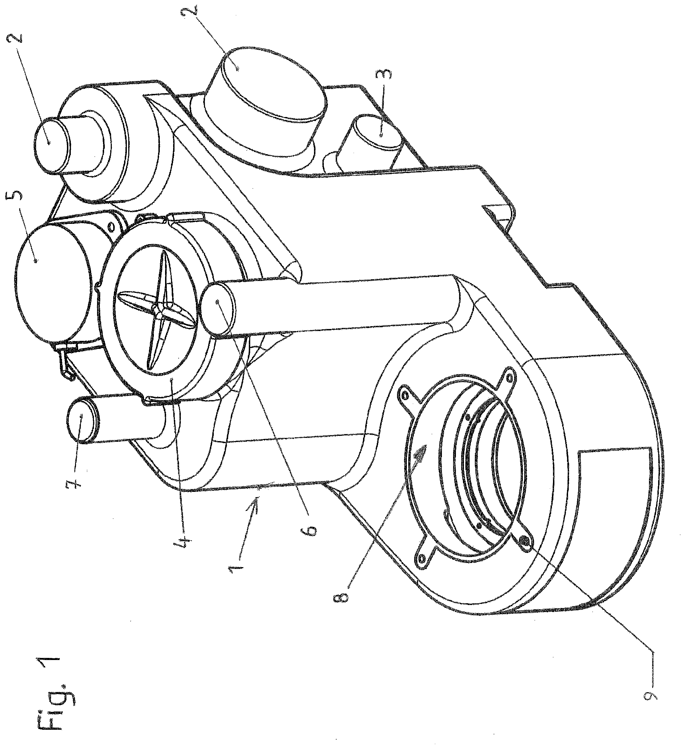

Figur 1 zeigt eine perspektivische Darstellung einer Anordnung mit einem Kunststoffbehälter 1. Im Ausführungsbeispiel handelt es sich bei dem Kunststoffbehälter 1 um einen Sammelbehälter, der für drucklosen Betrieb ausgelegt ist. Das anfallende Abwasser wird zwischengespeichert und anschließend in einen Abwasserkanal gefördert. Als besonders günstig erweist es sich, wenn das Nennvolumen des Behälters 1 weniger als 500 Liter, vorzugsweise weniger als 300 Liter, insbesondere weniger als 100 Liter beträgt. Im Ausführungsbeispiel beträgt das Nennvolumen des Behälters 1 vierzig Liter. Der Behälter 1 weist einen in seiner Bauhöhe höher ausgebildeten Bereich mit zwei Zuläufen 2 auf und einen von der Bauhöhe niedriger ausgebildeten Bereich, in dem das als Pumpenaggregat ausgeführte strömungsführende Bauteil angeordnet ist.

Anschlussstutzen für den Zulauf 2 sind einstückig mit dem Behälter 1 ausgebildet. Weiterhin weist der Behälter einen Entleerungsanschluss 3 auf, dessen Anschlussstutzen ebenfalls einstückig mit dem Behälter 1 ausgebildet ist.

Der Behälters 1 ist an seiner Oberseite mit einem Handloch versehen, das von einem Deckel 4 verschlossen ist. Im Behälter 1 ist ein Niveausensor zur Erfassung des Füllstands angeordnet. In Figur 1 ist der aus dem Behälter herausragende Teil eines Sensormoduls 5 zu erkennen, das im Ausführungsbeispiel als Niveaumesseinrichtung ausgeführt ist. Beispielsweise kommt dabei ein Schwimmerschalter zum Einsatz. Weiterhin weist der Behälter 1 einen Entlüftungsanschluss 6 auf. Über einem am Behälter 1 angeordneten Ablauf 7 wird das im Behälter 1 gesammelte Abwasser heraus gefördert.

In dem von seiner Bauhöhe niedrigeren Teil des Behälters 1 ist erfindungsgemäß ein Gehäuse 8 eines strömungsführenden Bauteils integriert. Bei dem Gehäuse 8 handelt es sich im Ausführungsbeispiel um das Spiralgehäuse einer Kreiselpumpe aus einem Gusswerkstoff. Das Gehäuse 8 weist Befestigungsvorsprünge 9 auf, die laschenartig am Gehäuse 8 angeordnet sind. Die Befestigungsvorsprünge 9 sind im Ausführungsbespiel jeweils um 90° zueinander versetzt. Bei einer alternativen Variante, die nicht dargestellt ist, sind nur drei Befestigungsvorsprünge 9 vorhanden, die jeweils 120° zueinander versetzt sind. Die Befestigungsvorsprünge 9 sind am Gehäuse 8 angeformt und somit einstückig mit dem Gehäuse 8 ausgebildet.

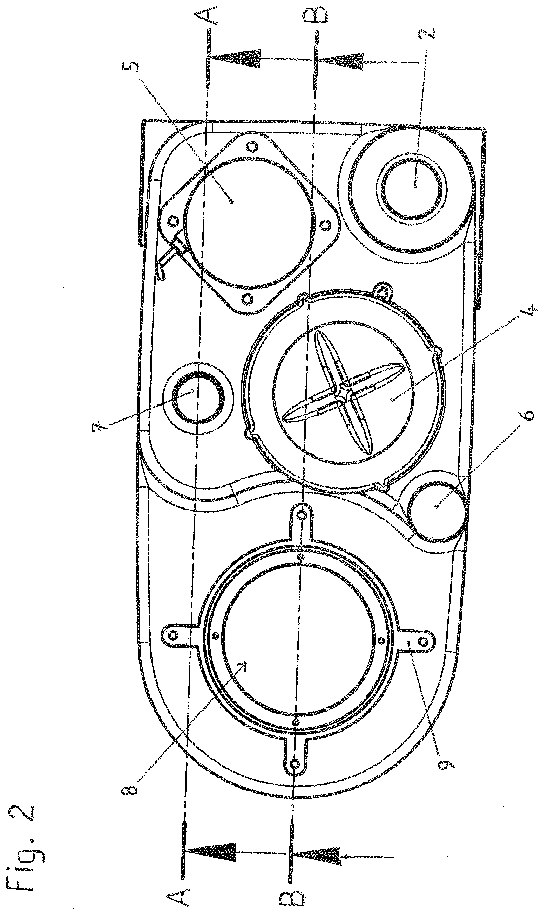

Figur 2 zeigt eine Draufsicht auf die Anordnung.

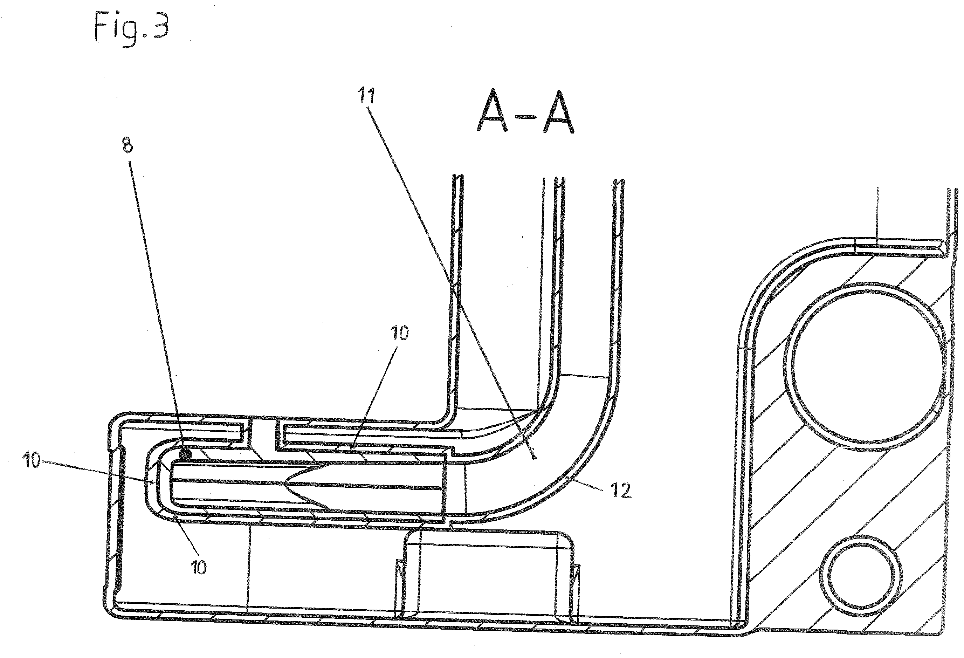

Eine Schnittdarstellung entlang der A-A-Linie gemäß Figur 2 ist in Figur 3 dargestellt. Man erkennt, dass das Gehäuse 8 des strömungsführenden Bauteils von Wandungen 10 des Behälters 1 formschlüssig umschlossen wird. Die Wandungen 10, welche das Gehäuse 8 umschließen, sind einstückig mit dem übrigen Behälter 1 ausgebildet. Das Gehäuse 8 ist somit in den Behälter 1 eingebettet. Erfindungsgemäß wird dies durch Rotationssintern erreicht. Bei dem Verfahren werden folgende Schritte durchgeführt:
- Befestigung des Gehäuses 8 in einer Rotationsform,
- Vorheizen der Rotationsform und des Gehäuses 8 mithilfe eines geeigneten Heizgebläses,
- Einfüllung von Kunststoffpartikeln und Verschließen der Form,
- Durchführung eines Rotationsvorgangs unter Aufrechterhaltung der Temperatur,
- leichtes Abkühlen und frühzeitiges Entformen des Kunststoff-Metallverbundteils,
- Abstützen des Gehäuses 8 durch eine geeignete Vorrichtung,
- vollständiges Abkühlen der Anordnung,
- mechanische Nachbearbeitung.

Zum Einrotieren des Gehäuses 8 wird dieses zunächst mittels einer geeigneten Verbindung an der Rotationsform befestigt.

Das Gehäuse 8 und die Form werden vorgeheizt und während des gesamten Rotationsprozesses mittels einer Heizvorrichtung kontrolliert temperiert. Die Temperatur wird hierbei an den verwendeten Kunststoff angepasst.

Im Ausführungsbeispiel wird als Kunststoffgranulat ein Thermoplast eingesetzt. Es handelt sich dabei vorzugsweise um Polyethylen (PE-LLD). Durch den Rotationsprozess und ein Aufschmelzen und Erstarren bildet sich der Behälter 1 und die gewünschte Wandung 10 aus. Durch die erfindungsgemäße Anwendung des Rotationssinterns umschließt die Wandung 10 des Behälters 1 das Gehäuse 8 so, dass keine zusätzliche Abdichtung erforderlich ist.

Während des Rotationsvorgangs sind alle Verbindungsstellen zwischen Form und Gehäuse 8 abgedichtet bzw. dicht ausgeführt, zum Beispiel als plane Fläche, sodass keine Spalte vorhanden sind, in welche der flüssige Kunststoff eindringen könnte, da dies zu unerwünschten Formgebungen führen würde.

Nach der Rotationsphase wird das Werkstück entformt. Das metallische Gehäuse 8 erkaltet langsamer als der Kunststoff. Es wird daher mit einer geeigneten Vorrichtung abgestützt, um es in der gewünschten Position beim Erkalten auszurichten.

Je nach Konstruktion können auch mehrere Teile eingebracht, ebenso wie komplexere Formgebungen realisiert werden.

Durch das Aufschmelzen, Anliegen und Erstarren der Kunststoffpartikel mittels der Rotationsbewegung wird eine Einheit von Gehäuse 8 und Behälter 1 geschaffen, bei der das Gehäuse 8 zumindest teilweise von einer Wand 10 des Behälters 11 umschlossen ist, wobei eine formschlüssige Verbindung geschaffen wird, sodass das Gehäuse 8 in den Behälter 1 integriert ist und eine Baueinheit bildet.

Im Ausführungsbeispiel ist an dem Gehäuse 8 ein Leitungselement 11 angeordnet. Bei dem Leitungselement 11 handelt es sich im Ausführungsbeispiel um einen metallischen Krümmer, der einen Druckstutzen mit einem Winkel von 90° bildet. Das Leitungselement 11 ist von einer Kunststoffwandung 12 des Behälters 1 umgeben. Die Kunststoffwandung 12 ist einstückig mit dem übrigen Behälter 1 ausgebildet und wird erfindungsgemäß durch ein Rotationssinterverfahren ausgebildet. Im Gehäuse 8 ist ein Laufrad des als Kreiselpumpe ausgeführten strömungsführenden Bauteils angeordnet. Das Gehäuse 8 weist eine Öffnung auf, an welche der Motor angeschlossen wird, der das Laufrad mittels einer Welle antreibt.

Bei dem strömungsführenden Bauteil handelt es sich im Ausführungsbeispiel um ein Kreiselpumpenaggregat, das folgende Teile umfasst: Gehäuse, Laufrad, Welle, Motor. Erfindungsgemäß ist das Gehäuse 8 des Kreiselpumpenaggregats formschlüssig durch Rotationssintern mit dem Kunststoffbehälter 1 verbunden.

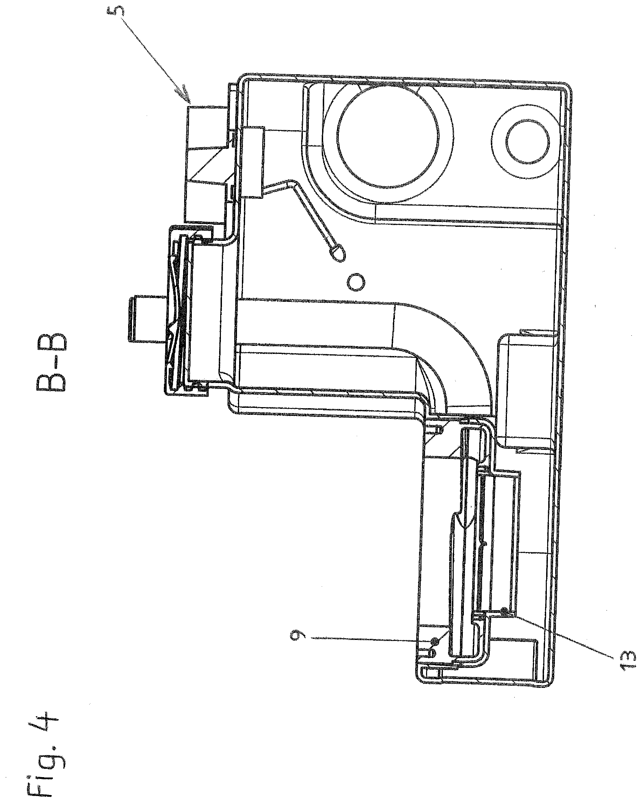

Figur 4 zeigt eine Schnittdarstellung entlang der B-B-Linie gemäß Figur 2. In Figur 4 erkennt man, dass eine Wandung 13 des Behälters 1 einen Saugstutzen ausbildet, durch den das Medium in das Gehäuse 8 einströmt. Die Wandung 13 ist einstückig mit dem übrigen Behälter 1 ausgebildet.
Bei einem Betrieb der Anordnung fließt durch einen Zulauf 2 Flüssigkeit in den Kunststoffbehälter 1. Bei einem oberen Grenzwert des Flüssigkeitsstands im Behälter 1 enthält eine Steuerung beispielsweise von einem Schwimmerschalter einen Schaltsignal der den Befehl "Abpumpbetrieb EIN" auslöst. Das als Kreiselpumpe ausgeführte strömungsführende Bauteil wird durch die Steuereinrichtung eingeschaltet. Infolgedessen sinkt der Flüssigkeitsstand im Kunststoffbehälter 1. Sobald ein unterer Grenzwert des Füllstands erreicht ist wird die Kreiselpumpe abgeschaltet.

Die Anordnung ist unterhalb einer Rückstauebene angeordnet. Das Abwasser wird von der Kreiselpumpe durch den Ablauf 7 über eine nicht dargestellte Rücklaufklappe in einen Abwasserkanal gefördert.

Die erfindungsgemäße Anordnung erlaubt eine kosteneffizientere und baulich kleinere Konstruktion. Durch das Einbringen metallischer Gehäuseteile in eine Rotationssinterform entsteht eine Einheit aus dem Kunststoffbehälter 1 und einem metallischen Gehäuse 8 eines strömungsführenden Bauteils. Das Gehäuse 8 wird bei der Herstellung des Rotationsteils von Kunststoff umschlossen und somit formschlüssig und gegebenenfalls kraftschlüssig im Behälter integriert, ohne dass zusätzliche Befestigungsmittel und Dichtanordnungen erforderlich sind.

Die erfindungsgemäße Anordnung weist eine Einbettungsausformung der Wandungen 10 des Kunststoffbehälters für ein Gehäuse 8 eines strömungsführenden Bauteils auf, bei dem eine formschlüssige Verbindung zwischen Behälter 1 und Gehäuse 8 durch Rotationssintern entsteht. Die Kunststoffwandungen 10 des Behälters, welche das Gehäuse 8 formschlüssig umschließen, sind einstückig mit dem Behälter 1 ausgebildet.

## Patentansprüche

1. Anordnung mit einem Kunststoffbehälter (1) und einem strömungsführenden Bauteil, das ein Gehäuse (8) aufweist,
**dadurch gekennzeichnet, dass**
das Gehäuse (8) ein Pumpengehäuse ist, das aus einem metallischen Werkstoff besteht, wobei das Gehäuse (8) durch Rotationssintern mit dem Kunststoffbehälter (1) formschlüssig verbunden ist.

2. Anordnung nach Anspruch 1, **dadurch gekennzeichnet, dass** das Gehäuse (8) zumindest teilweise von mindestens einer Wandung (10) des Behälters (1) umschlossen ist, wobei die Wandung (10) einstückig mit dem Behälter (1) ausgebildet ist.

3. Anordnung nach einem der Ansprüche 1 bis 2, **dadurch gekennzeichnet, dass** das Gehäuse (8) in eine Wandung (10) des Behälters (1) eingebettet ist, wobei das Gehäuse (8) vorzugsweise tragend eingebettet ist, insbesondere tragend für eine Antriebseinheit.

4. Anordnung nach einem der Ansprüche 1 bis 3, **dadurch gekennzeichnet, dass** eine Wandung (10) des Behälters (1) am Gehäuse (8) dichtend, insbesondere spaltfrei, anliegt.

5. Anordnung nach einem der Ansprüche 1 bis 4, **dadurch gekennzeichnet, dass** im Gehäuse (8) bewegliche Bauteile angeordnet sind.

6. Anordnung nach einem der Ansprüche 1 bis 5, **dadurch gekennzeichnet, dass** im Gehäuse (8) ein Laufrad einer Kreiselpumpe angeordnet ist.

7. Anordnung nach einem der Ansprüche 1 bis 6, **dadurch gekennzeichnet, dass** eine Wandung (13) des Behälters (1) einen Stutzen für den Eintritt eines Mediums in das Gehäuse (8) bildet, wobei die Wandung (13) einstückig mit dem Behälter (1) ausgebildet ist.

8. Anordnung nach einem der Ansprüche 1 bis 7, **dadurch gekennzeichnet, dass** am Gehäuse (8) ein Leitungselement (11) zur Abführung von Medium angeordnet ist, das durch Rotationssintern von einer Wandung (12) des Behälters (1) umschlossen ist, wobei die Wandung (12) einstückig mit dem Behälter (1) ausgebildet ist.

9. Verfahren zur Herstellung einer Anordnung nach einem der Ansprüche 1 bis 8 mit folgenden Schritten:
- Anordnung eines Pumpengehäuses (8) eines strömungsführenden Bauteils in einer Form,
- Anlegen von Kunststoffpartikeln durch Rotation an die Form und das Pumpengehäuse (8),
- Schmelzen und Erstarren der Kunststoffpartikel an der Form und dem Pumpengehäuse.

## Claims

1. Arrangement having a plastic container (1) and having a flow-guiding component which has a casing (8),
**characterized in that**
the casing (8) is a pump casing which consists of a metallic material, wherein the casing (8) is connected in a form-fitting manner to the plastic container (1) by rotational sintering.

2. Arrangement according to Claim 1, **characterized in that** the casing (8) is surrounded at least partially by at least one wall (10) of the container (1), wherein the wall (10) is formed in one piece with the container (1).

3. Arrangement according to either of Claims 1 and 2, **characterized in that** the casing (8) is embedded into a wall (10) of the container (1), wherein the casing (8) is preferably embedded so as to be load-bearing, in particular so as to be load-bearing for a drive unit.

4. Arrangement according to one of Claims 1 to 3, **characterized in that** a wall (10) of the container (1) bears sealingly, in particular without a gap, against the casing (8).

5. Arrangement according to one of Claims 1 to 4, **characterized in that** movable components are arranged in the casing (8).

6. Arrangement according to one of Claims 1 to 5, **characterized in that** an impeller of a centrifugal pump is arranged in the casing (8).

7. Arrangement according to one of Claims 1 to 6, **characterized in that** a wall (13) of the container (1) forms a connector for entry of a medium into the casing (8), wherein the wall (13) is formed in one piece with the container (1).

8. Arrangement according to one of Claims 1 to 7, **characterized in that** a line element (11) for discharge of medium is arranged on the casing (8) and, by rotational sintering, is surrounded by a wall (12) of the container (1), wherein the wall (12) is formed in one piece with the container (1).

9. Method for producing an arrangement according to one of Claims 1 to 8, comprising the following steps:
- arranging a pump casing (8) of a flow-guiding component in a mould,
- causing plastic particles to bear against the mould and the pump casing (8) by rotation
- melting and solidifying the plastic particles on the mould and the pump casing.

## Revendications

1. Agencement muni d'un contenant en matière plastique (1) et d'un composant de guidage de flux, qui comprend un boîtier (8),
**caractérisé en ce que**
le boîtier (8) est un boîtier de pompe, qui est constitué par un matériau métallique, le boîtier (8) étant relié par accouplement de forme avec le contenant en matière plastique (1) par frittage rotatif.

2. Agencement selon la revendication 1, **caractérisé en ce que** le boîtier (8) est entouré au moins partiellement par au moins une paroi (10) du contenant (1), la paroi (10) étant configurée d'un seul tenant avec le contenant (1).

3. Agencement selon l'une quelconque des revendications 1 à 2, **caractérisé en ce que** le boîtier (8) est incorporé dans une paroi (10) du contenant (1), le boîtier (8) étant de préférence incorporé de manière portante, notamment de manière portante pour une unité d'entraînement.

4. Agencement selon l'une quelconque des revendications 1 à 3, **caractérisé en ce qu'**une paroi (10) du contenant (1) est appliquée en étanchéité, notamment sans fente, sur le boîtier (8).

5. Agencement selon l'une quelconque des revendications 1 à 4, **caractérisé en ce que** des composants mobiles sont agencés dans le boîtier (8).

6. Agencement selon l'une quelconque des revendications 1 à 5, **caractérisé en ce qu'**un rotor d'une pompe centrifuge est agencé dans le boîtier (8).

7. Agencement selon l'une quelconque des revendications 1 à 6, **caractérisé en ce qu'**une paroi (13) du contenant (1) forme un embout pour l'entrée d'un milieu dans le boîtier (8), la paroi (13) étant configurée d'un seul tenant avec le contenant (1).

8. Agencement selon l'une quelconque des revendications 1 à 7, **caractérisé en ce qu'**un élément de conduite (11) pour l'évacuation de milieu est agencé sur le boîtier (8), qui est entouré par frittage rotatif par une paroi (12) du contenant (1), la paroi (12) étant configurée d'un seul tenant avec le contenant (1).

9. Procédé de fabrication d'un agencement selon l'une quelconque des revendications 1 à 8, comprenant les étapes suivantes :
- l'agencement d'une boîtier de pompe (8) d'un composant de guidage de flux dans un moule,
- la disposition de particules de matière plastique par rotation sur le moule et le boîtier de pompe (8),
- la fusion et la solidification des particules de matière plastique sur le moule et le boîtier de pompe.
